# EUROPÄISCHE PATENTANMELDUNG

(11) **EP 3 812 222 A1**
(43) Veröffentlichungstag der Anmeldung: **28.04.2021**
(21) Anmeldenummer: 20198281.6
(22) Anmeldetag: 25.09.2020
(51) Int. Cl.: B60S 9/18, B60D 1/66

(54) **STÜTZEINRICHTUNG ZUR BEFESTIGUNG AN EINER ANHÄNGERDEICHSEL**

(30) Priorität: 21.10.2019 DE 102019128380
(71) Anmelder: Miku GmbH, 58256 Ennepetag (DE)
(72) Erfinder: Kuhnhen, Michael, 58256 Ennepetal (DE)
(74) Vertreter: Köchling, Conrad-Joachim

(57) **Zusammenfassung**

Um eine Stützeinrichtung zur Befestigung an einer Anhängerdeichsel, zumindest umfassend ein äußeres Rohr (1) und ein in dem äußeren Rohr (1) angeordnetes und mittels einer Kurbel teleskopartig verstellbares, inneres Rohr (2), an dem das erste Ende eines Radträgers (3) angelenkt ist, wobei am zweiten Ende des Radträgers (3) ein Stützrad (4) angeordnet ist und der Radträger (3) mitsamt des Stützrads (4) in einer ersten Endlage, in der das innere Rohr (2) nahezu vollständig innerhalb des äußeren Rohres (1) angeordnet ist und das Stützrad (4) hochgeschwenkt und dem äußeren Rohr (1) angenähert ist in eine zweite Endlage, in der das innere Rohr (2) teilweise aus dem äußeren Rohr (1) in Richtung des Erdbodens herausragt und das Stützrad (4) in eine von dem äußeren Rohr (1) beabstandete und dem Erdboden zugewandte Lage verschwenkt ist, zu schaffen, bei der ein Herunterfallen der Anhängerdeichsel bis auf den Erdboden nach Überwinden der Blockierung in der zweiten Endlage wirksam verhindert ist, bei dem ferner auch bei einer Überbelastung des Rades ein Einschwenken bis in die erste Endlage und die damit verbundene Verletzungsgefahr eines Benutzers wirksam verhindert ist, die dabei kostengünstig und einfach herzustellen ist und eine hohe Lebensdauer aufweist, wird vorgeschlagen, dass die Verstellung des Radträgers (3) mitsamt des Rads (4) zwischen der ersten und der zweiten Endlage stufenweise erfolgt.

## Beschreibung

Die Erfindung betrifft eine Stützeinrichtung zur Befestigung an einer Anhängerdeichsel, zumindest umfassend ein äußeres Rohr und ein in dem äußeren Rohr angeordnetes und mittels einer Kurbel teleskopartig verstellbares, inneres Rohr, an dem das erste Ende eines Radträgers angelenkt ist,
wobei am zweiten Ende des Radträgers ein Rad angeordnet ist und der Radträger mitsamt des Rads in einer ersten Endlage, in der das innere Rohr nahezu vollständig innerhalb des äußeren Rohres angeordnet ist und das Rad hochgeschwenkt und dem äußeren Rohr angenähert ist in eine zweite Endlage, in der das innere Rohr teilweise aus dem äußeren Rohr in Richtung des Erdbodens herausragt und das Rad in eine von dem äußeren Rohr beabstandete und dem Erdboden zugewandte Lage verschwenkt ist, wobei an dem der Kurbel entgegengesetzten Ende des äußeren Rohres ein nach außen abragender Kragen angeordnet ist, entlang dessen eine am ersten Ende des Radträgers angeordnete Kontur beim Verstellen zwischen den Endlagen verläuft und die Verschwenkung bewirkt.

Derartige Stützeinrichtungen finden in der Regel Verwendung an verschiedensten Anhängern, die von einem Kraftfahrzeug gezogen werden sollen.

Die Stützeinrichtung ist dabei am freien Ende der Anhängerdeichsel angeordnet und dient dazu, den Anhänger einerseits im nicht an einem Kraftfahrzeug angehängten Zustand abzustützen und andererseits diesen auf vereinfachte Art und Weise rangieren zu können.

Dazu ist das Rad mit samt des Radträgers häufig um 360° drehbar und in der Höhe verstellbar. Das Rad ist dabei mit samt des Radträgers zwischen zwei Endlagen verstellbar. In der ersten Endlage ist der Radträger mit samt des Rades hochgeschwenkt, sodass das Rad an das äußere Rohr angenähert ist oder dieses kontaktiert und gegebenenfalls gegen dieses verspannt ist. In der zweiten Endlage ist der Radträger mit samt des Rades in eine dem Erdboden zugewandte Lage verschwenkt und kann anschließend durch weiteres Betätigen der Kurbel noch in der Höhe weiter verstellt werden, sodass die Anhängerdeichsel hierdurch angehoben wird.

Derartige Stützeinrichtungen haben sich im Stand der Technik bewährt und finden vielfach Verbreitung bei verschiedensten Arten von Anhängern, wie insbesondere Wohnwagen oder Transportanhängern.

Beim Verschwenken aus der ersten in die zweite Endlage und zurück in die erste Endlage verläuft eine am Radträger angeordnete Kontur mit einer definierten Form entlang eines am Ende des äußeren Rohres nach Außen abragenden Kragens, sodass hierdurch ein vergrößerter Schwenkweg bei nur besonders wenigen benötigten Umdrehungen der Kurbel erzeugt wird. Dieser vergrößerte Schwenkweg ermöglicht ein vereinfachtes Einschwenken und Ausschwenken des Rades in die Endlagen, wobei nur eine besonders geringe Anzahl an Kurbelumdrehungen benötigt ist.

Während dieses durch die Kontur mit der definierten Form beschleunigten Verschwenkens hängt der Radträger mit samt des Rades quasi frei und wird lediglich in der zweiten Endlage, also in der der Radträger mit samt des Rades vollständig in Richtung des Erdbodens ausgeschwenkt ist und anschließend ausschließlich höhenverstellbar ist, blockiert. Diese Blockierung verhindert ein ungewünschtes Verschwenken aus der zweiten Endlage in die erste Endlage oder in Richtung der ersten Endlage bei belastetem Rad. Dies bedeutet, wenn das Rad auf dem Erdboden aufsteht und durch die Anhängerdeichsel belastet ist, soll hierdurch ein ungewünschtes Einschwenken in Richtung der ersten Endlage verhindert werden. Der Radträger weist dabei ein Blockier-Stück und die am Ende des Radträgers ausgebildete Kontur mit einer definierten Form auf. Zudem ist der Radträger an einem Drehpunkt an dem Innenrohr üblicherweise mittels eines Bolzens befestigt. Dieses Blockier-Stück wird über einen gegen die Kraft einer Feder wirkenden Sperrbolzen, der über den nach außen abragenden Kragen des äußeren Rohres verfährt, gesperrt oder freigegeben.

Bei einer derartigen im Stand der Technik bekannten und weit verbreiteten Lösung ist es nachteilig, dass der Radträger mit samt des Rades lediglich in der zweiten Endlage, also in der vollständig ausgeschwenkten Endlage blockiert, beziehungsweise gesperrt ist. In jeder anderen Lage des Radträgers mit Rad ist dieser nicht gegen ein ungewünschtes Hochschwenken in Richtung der ersten Endlage gesperrt oder gesichert.

Somit kann beispielsweise in dem Fall, dass unterhalb des eingeschwenkten Rades nicht genug Platz vorhanden ist, um den Radträger mit samt des Rades vollständig in die zweite Endlage auszuschwenken, das Verschwenken in die zweite Endlage nicht vollständig erfolgen und somit erfolgt keine Blockierung des Radträgers mit samt des Rades in der zweiten Endlage. Zudem kann bei einer Überbelastung des Rades der Sperrbolzen abscheren und das Rad ungewünscht gegebenenfalls bis zum Erreichen der ersten Endlage einschwenken, wodurch die Anhängerdeichsel bis auf den Erdboden herunterfallen kann und gegebenenfalls ein Benutzer verletzt werden kann.

Auch bei einem versehentlichen Betätigen der Kurbel in falscher Richtung kann bei belastetem Rad die Blockier-Position überwunden werden und der Radträger mit samt des Rades freigegeben werden und verschwenken. Sollte in diesem Fall das Rad noch belastet sein, so würde die Anhängerdeichsel nach Verlassen der Blockierlage des Radträgers bis auf den Erdboden hinunterfallen und auch hierdurch eine hohe Verletzungsgefahr bewirken.

Aufgrund des eingangs genannten Standes der Technik liegt der vorliegenden Erfindung die Aufgabe zugrunde, eine Stützeinrichtung der eingangs genannten Art zu schaffen, bei der ein Herunterfallen der Anhängerdeichsel bis auf den Erdboden nach Überwinden der Blockierung in der zweiten Endlage wirksam verhindert ist, bei dem ferner auch bei einer Überbelastung des Rades ein Einschwenken bis in die erste Endlage und die damit verbundene Verletzungsgefahr eines Benutzers wirksam verhindert ist, die dabei kostengünstig und einfach herzustellen ist und eine hohe Lebensdauer aufweist.

Zur Lösung dieser Aufgabe schlägt die Erfindung vor, dass die Verstellung des Radträgers mitsamt des Rads zwischen der ersten und der zweiten Endlage stufenweise erfolgt.

Die Anordnung der Verstellung in verschiedenen Stufen zwischen den beiden Endlagen ermöglicht somit ein Verhindern des Herunterfallens einer Anhängerdeichsel nach Überwinden der Blockierlage in der zweiten Endlage. Sollte eine derartige Vorrichtung beispielsweise unsachgemäß durch Betätigen der Kurbel bedient werden und die Blockierung in der zweiten Endlage überwunden werden, so kann selbst bei einem belasteten Rad lediglich eine Verstellung bis in die darauffolgende, nächste Stufe erfolgen und ein ungewünschtes Herunterfallen der Anhängerdeichsel bis auf den Erdboden und eine dadurch bedingte hohe Verletzungsgefahr für den Benutzer vermieden werden.

Auch für den Fall einer Überbelastung kann bei einer stufenweisen Verstellung die Anhängerdeichsel nach Überwinden der Blockierung in der zweiten Endlage nicht bis in die erste Endlage beziehungsweise beliebig weit in Richtung der ersten Endlage verstellt werden und somit ein Herunterfallen der Anhängerdeichsel in Richtung des Erdbodens verhindert werden, da lediglich der geringe Weg zur nächsten Stufe freigegeben ist und die Stützeinrichtung in der nächsten Stufe den Radträger mit samt des Rades blockiert. Somit ist das ungewünschte Herunterfallen der Anhängerdeichsel gegebenenfalls bis auf den Erdboden und eine damit verbundene Verletzungsgefahr eines Benutzers vermieden beziehungsweise weitestgehend verhindert.

Die stufenweise Verstellung kann dabei je nach Ausführungsform eine beliebige Anzahl von Stufen aufweisen, wobei sich die Anordnung von mindestens zwei Stufen zwischen den jeweiligen Endlagen als besonders vorteilhaft herausgestellt hat.

Insbesondere kann dabei besonders bevorzugt vorgesehen sein, dass am freien Ende des inneren Rohres ein kastenartiges Gehäuse angeordnet ist, wobei der nach außen abragende Kragen den ersten Endbereich eines Hebels kontaktiert und diesen Hebel beim Verstellen zwischen den Endlagen um eine Schwenkachse verschwenkt, wobei der zweite Endbereich des Hebels einen Sperrkörper an einer ersten Kontaktfläche kontaktiert und den Sperrkörper in einer etwa zum Erdboden parallelen Richtung verstellt, wobei der Sperrkörper einen zweiten Kontaktbereich aufweist, der in einer Sperrlage zwischen an einem um eine Schwenkachse verschwenkbaren Stellkörper ausgebildeten Vorsprüngen angeordnet ist, wobei der Stellköper fest mit dem Radträger verbunden ist, wobei der Hebel, die Schwenkachse des Hebels, der Sperrkörper und der Stellkörper an einer senkrecht zum Erdboden verlaufenden Außenseite des kastenartigen Gehäuses angeordnet sind, wobei der erste Endbereich des Hebels die am inneren Rohr befestigte Oberseite des Gehäuses überragt und dort den Kragen des äußeren Rohres kontaktiert.

Durch die Anordnung eines derartigen verschiebbaren Sperrkörpers, welcher mit einem am Radträger befestigten Stellkörper zusammenwirkt, ist während der Verstellung zwischen den Endlagen jederzeit sichergestellt, dass der Radträger mit samt des Rades in verschiedene, stufenartige Rastpositionen verfährt. Hierdurch ist ein Herunterfallen der Anhängerdeichsel bis maximal zum Erreichen der nächsten Stufe ermöglicht. Dies sind in der Regel lediglich wenige Zentimeter Höhenunterschied zum Erdboden, sodass zum einen das Herunterfallen der Anhängerdeichsel bis auf den Erdboden und zum anderen eine Verletzungsgefahr durch diese herunterfallende Anhängerdeichsel für einen Benutzer verhindert oder vermindert ist.

Beim Betätigen der Kurbel verfährt das innere Rohr aus dem äußeren Rohr auf an sich bekannte Art und Weise heraus und gibt dabei durch den sich vergrößernden Abstand zwischen Gehäuseoberseite und Kragen des äußeren Rohres den ersten Endbereich des Hebels frei, sodass der Hebel verschwenken und das erste Ende des Hebels hochschwenken kann. Der Hebel verschwenkt dabei um eine Schwenkachse und kontaktiert mit seinem zweiten Endbereich die erste Kontaktfläche des Sperrkörpers, welcher in etwa waagerecht zum Erdboden gerichteter Richtung durch den Kontakt mit dem Hebel verschiebbar ist. Der Sperrkörper weist einen zweiten Kontaktbereich auf, dessen Form dazu geeignet ist, in entsprechende Vorsprünge, die an dem Stellkörper ausgebildet sind, einzugreifen und in dieser Lage nach Art einer Raste zu verbleiben. Beim Verstellen vom Bereich der ersten Endlage in Richtung der zweiten Endlage wird gleichzeitig der Radträger mit samt des daran befestigten Stellkörpers freigegeben, sodass er durch das Eigengewicht in Richtung des Erdbodens um eine Schwenkachse herum verschwenken kann.

Diese Verschwenkung ist jeweils bis zum Erreichen der nächsten Stufe, die durch die Vorsprünge am Stellkörper gebildet ist, ermöglicht. Dies bedeutet, dass beim Erreichen der ersten Stufe eine erste Blockierung des Radträgers mit samt des Rades erfolgt. Bei weiterer Freigabe nach Betätigung der Kurbel wird durch den sich drehenden Hebel der Sperrkörper weiter verstellt und gibt den Radträger mit Rad frei, sodass dieser bis zum Bereich zwischen den nächsten Vorsprüngen, der die nächste Stufe bildet, weiter in Richtung des Erdbodens verschwenken kann. Beim Erreichen der zweiten Endlage liegt der Sperrkörper mit einer Fläche an seinem zweiten Kontaktbereich an dem Stellkörper an und blockiert die Stützeinrichtung in dieser Lage.

Sollte durch versehentliche Betätigung der Kurbel bei noch belastetem Rad oder bei einer Überlastung des Rades die Blockierung in der zweiten Endlage überwunden werden, so kann das Rad mit samt des Radträgers lediglich bis in die nächste Stufe verschwenken, um in dieser wieder blockiert zu werden.

Hierdurch ist das Herunterfallen der Anhängerdeichsel bis auf den Erdboden wirksam verhindert, da der Radträger mit samt des Rades nach Verlassen dieser zweiten Endlage nicht vollständig freigegeben ist, sondern lediglich bis in die nächste Stufe verschwenken kann. Zudem kann eine derartige erfindungsgemäße Lösung auch deutlich höhere Lasten aufnehmen als bekannte Lösungen, sodass eine Abscherung im Falle einer Überlast äußerst unwahrscheinlich und lediglich bei extrem hohen Überlasten auftreten kann.

Durch eine erfindungsgemäße Lösung und durch das Verhindern des Herunterfallens der Deichsel ist die Verletzungsgefahr von umgebenden Personen verhindert oder deutlich vermindert.

Beim Verstellen aus der zweiten Endlage in die erste Endlage erfolgt zunächst eine Kontaktierung des ersten Endes des Hebels durch den am äußeren Rohr ausgebildeten Kragen. Dieser Kragen bewirkt eine Verschwenkung des Hebels, wobei der Hebel mit seinem zweiten Ende den Sperrkörper etwa waagerecht zum Erdboden verstellt, wodurch der zweite Kontaktbereich des Sperrkörpers die jeweilige Rastposition am Stellkörper verlässt und im Bereich der nachfolgenden, daneben angeordneten Rastposition des Stellkörpers, der durch die entsprechenden Vorsprünge gebildet ist, angeordnet ist. Das Anheben und somit Verschwenken des Radträgers mit samt des Rades erfolgt dabei durch den Kontakt des Kragens des äußeren Rohres mit der Kontur des Radträgers auf an sich bekannter Art und Weise.

Zur deutlichen Erhöhung der Stabilität einerseits und der aufzunehmenden Kräfte andererseits kann besonders bevorzugt vorgesehen sein, dass außenseitig an jeder senkrechten Längsseitenwand des Gehäuses je ein Hebel, ein Sperrkörper und ein Stellkörper angeordnet ist, wobei die Hebel durch eine Schwenkachse und die Stellkörper durch eine jeweils das Gehäuse durchgreifende Schwenkachse verbunden sind.

Eine derartige Ausbildung von an beiden Längsseitenwänden des Gehäuses angeordneten Hebeln, Sperrkörpern und Stellkörpern ermöglicht eine besonders stabile und besonders hohe Kräfte aufnehmende Ausführung der Erfindung, sodass eine derartige Stützeinrichtung zum einen besonders Belastbarkeit und zum anderen eine besonders hohe Lebensdauer aufweist.

Dabei kann besonders bevorzugt vorgesehen sein, dass das Gehäuse ein Langloch aufweist, welches von am Gehäuses angeordneten oder das Gehäuse durchgreifenden Führungsmitteln durchgriffen und geführt ist, an deren freien Enden der Sperrkörper befestigt ist, wobei der Sperrkörper gegen die Kraft einer Feder vorgespannt gehalten ist.

Weiter kann dabei besonders bevorzugt vorgesehen sein, dass die Feder aus einer Zugfeder oder einer Druckfeder gebildet ist, die innerhalb des Gehäuses angeordnet ist, wobei der Sperrkörper in der ersten Endlage durch die Kraft der Feder maximal vorgespannt ist.

Durch die Anordnung sowohl der Führungsmittel, die durch ein Langloch des Gehäuses nach außen vorragen und darin geführt sind, als auch die Anordnung des Sperrkörpers, der gegen die Kraft einer Feder, vorgespannt und gegen diese verstellbar ist ein besonders einfacher und langlebiger Betrieb der entsprechenden Teile sichergestellt. Die Vorspannung des Sperrkörpers gegen die Kraft einer Feder bewirkt dabei das selbständige Verstellen in waagerechter Richtung des Sperrkörpers beim Verstellen des Radträgers mit Rad aus der ersten, eingeschwenkten Endlage in Richtung der zweiten, vollständig ausgeschwenkten Endlage in der die Feder nahezu entspannt oder teilentspannt ist. Das Sperrstück wird durch die Federkraft selbständig nach Freigabe durch den zweiten Bereich des Hebels in Richtung der nächsten Stufe des Stellkörpers verschoben. Beim Einschwenken des Rades, also beim Verschwenken des Radträgers mit Rad in Richtung der ersten Endlage wird der Sperrkörper durch den Hebel in die vorgespannte Lage verschoben. Die Verschiebung erfolgt dabei entlang der am Sperrkörper ausgebildeten Langlöcher, welche von entsprechenden Führungsmitteln durchgriffen sind.

Die maximale Vorspannung des Sperrkörpers in der ersten Endlage hat sich in der Praxis als besonders bewährt und als bevorzugte Lösung dargestellt.

Insbesondere kann dabei besonders bevorzugt vorgesehen sein, dass die Führungsmittel durch Führungsbolzen oder Führungsstifte gebildet sind.

Die Verwendung von geeigneten Führungsbolzen oder Führungsstiften hat sich in der Praxis als besonders vorteilhaft und gleichzeitig kostengünstig und eine hohe Lebensdauer aufweisend erwiesen.

Schließlich kann besonders bevorzugt vorgesehen sein, dass die Vorsprünge eine spitze oder zahnartige Form aufweisen, wobei jeweils zwischen zwei aufeinanderfolgenden Spitzen oder Zähnen ein Bereich ausgebildet ist, der den zweiten Kontaktbereich oder eine am zweiten Kontaktbereich ausgebildete Kontur umgreift oder aufnimmt und in dieser Lage den Stellkörper sperrt, wobei jeder zwischen zwei aufeinanderfolgenden Spitzen oder Zähnen ausgebildete Bereich eine Stufe bei der Verstellung des Radträgers mitsamt des Rads zwischen den Endlagen bildet.

Auch die Ausbildung von eine Spitze oder eine zahnartige Form aufweisenden Vorsprüngen hat sich als besonders einfaches und dabei kostengünstig herzustellendes und langlebiges Mittel zur Bildung der entsprechenden Stufen bewährt. Die Form der Spitzen oder die Zahnform ist dabei jeweils komplementär zu der Form des zweiten Kontaktbereiches des Sperrkörpers gebildet. Dies bedeutet, dass der zweite Kontaktbereich des Sperrkörpers eine Form aufweist, die zwischen den entsprechenden Spitzen oder Zähnen, die die Vorsprünge bilden, jeweils angeordnet werden kann und dort einen sicheren Verbleib des Sperrkörpers auch bei einer hohen Belastung des Rades ermöglicht. Erst nach Verstellen des Sperrkörpers kann der zweite Kontaktbereich des Sperrkörpers diese entsprechenden Vorsprünge, die jeweils eine Stufe bilden, verlassen, um im Bereich der nächsten Stufe wieder angeordnet zu werden und hier eine Blockierung des Sperrkörpers und des damit verbundenen Radträgers mit Rad zu bilden.

Ein Ausführungsbeispiel ist in den Figuren dargestellt und im Folgenden näher beschrieben.

Es zeigt:
- Figur 1: ein Ausführungsbeispiel der Erfindung in der ersten Endlage;

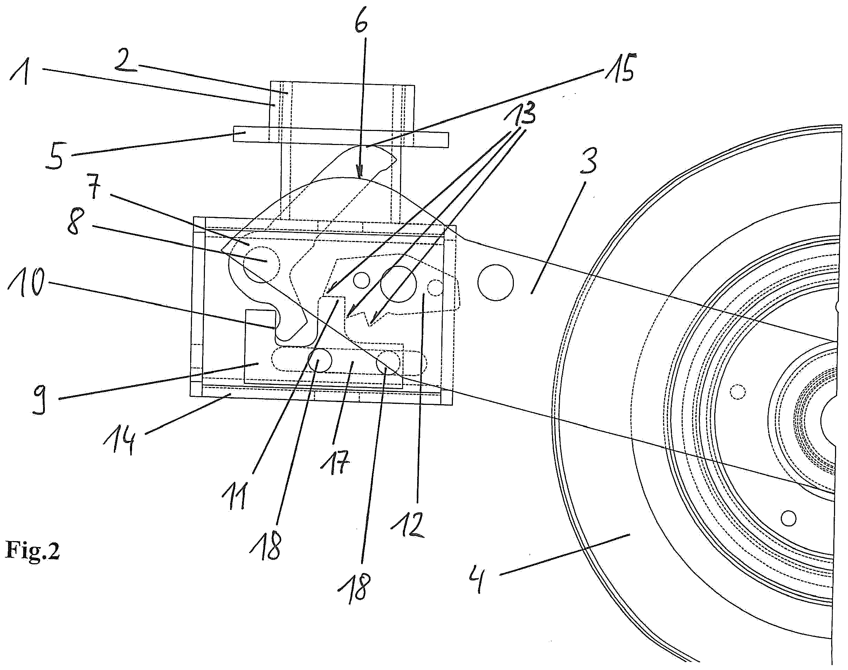

- Figur 2: desgleichen in einer ersten Zwischenlage (Stufe);

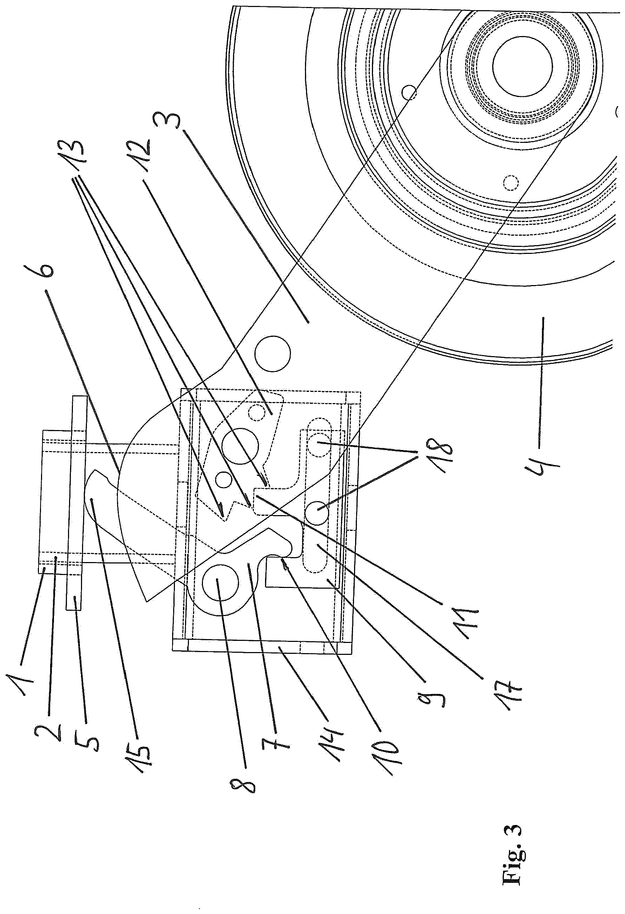

- Figur 3: desgleichen in einer zweiten Zwischenlage (Stufe);
- Figur 4: desgleichen in der zweiten Endlage;
- Figur 5: eine alternative Darstellung Der erfindungsgemäßen Stützeinrichtung in der zweiten Endlage.

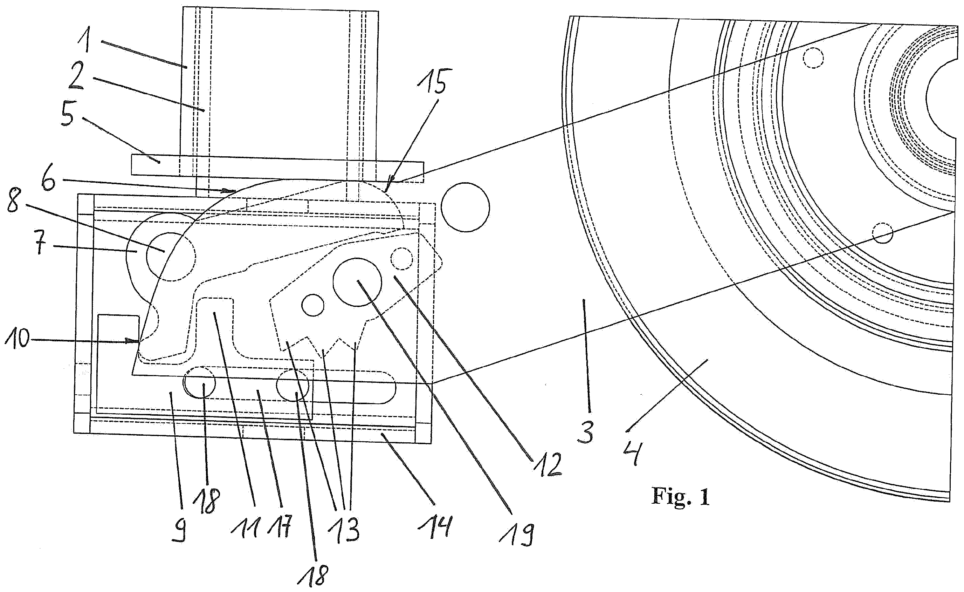

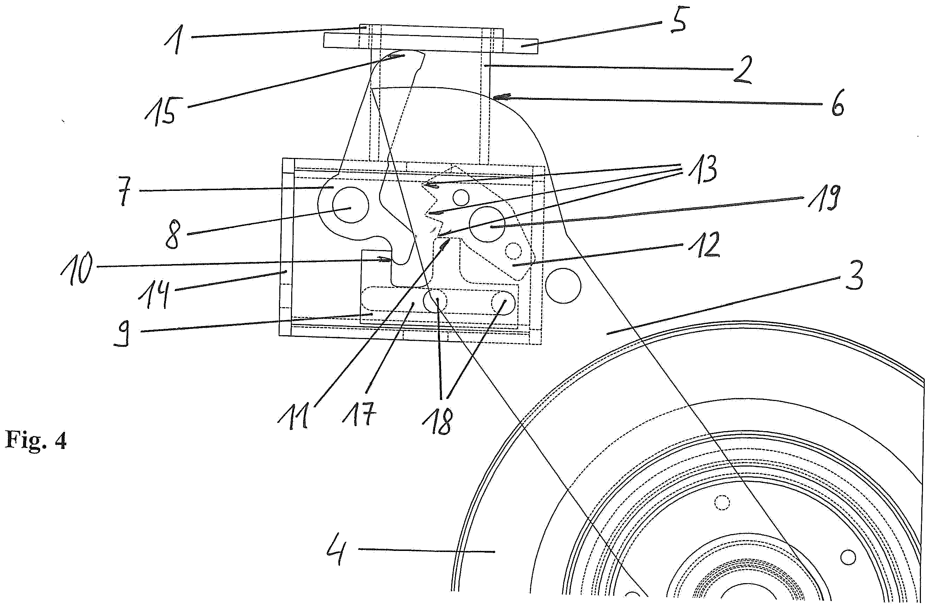

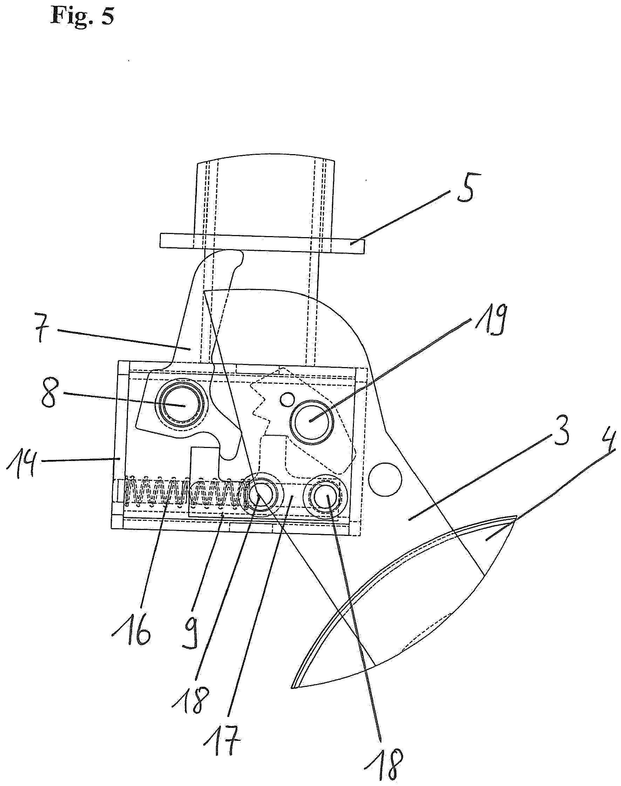

In den Figuren sind Teile einer Stützeinrichtung zur Befestigung an einer Anhängerdeichsel gezeigt. Die Stützeinrichtung umfasst zumindest ein äußeres Rohr 1 und ein in dem äußeren Rohr 1 angeordnetes und mittels einer Kurbel teleskopartig verstellbares inneres Rohr 2. An dem inneren Rohr 2 ist das erste Ende eines Radträgers 3 angelenkt. Am zweiten Ende des Radträgers 3 ist ein Rad 4 angeordnet. In einer ersten Endlage (Figur 1) ist der Radträger 3 mit samt des Rades 4 in Richtung des äußeren Rohres 1 hochgeschwenkt und dem äußeren Rohr angenähert oder gegen dieses verspannt. In dieser ersten Endlage ist das innere Rohr 2 nahezu vollständig innerhalb des äußeren Rohres 1 angeordnet. Der Radträger 3 mit samt des Rades 4 ist aus der ersten Endlage in eine zweite Endlage (Figuren 4 und 5) verschwenkbar, in der das innere Rohr 2 teilweise aus dem äußeren Rohr 1 in Richtung des Erdbodens herausragt. In dieser zweiten Endlage ist der Radträger 3 mit samt des Rades 4 in eine von dem äußeren Rohr 1 beabstandete und dem Erdboden zugewandte Lage verschwenkt. Das äußere Rohr 1 weist an seiner der Kurbel entgegengesetzten Endseite einen nach außen abragenden Kragen 5 auf, entlang dessen eine am ersten Ende des Radträgers 3 angeordnete Kontur 6 während der Verstellung zwischen den Endlagen verläuft und die Verschwenkung des Radträgers 3 mit samt des Rades 4 bewirkt. Durch diese entlang des Kragens 5 verlaufende Kontur 6 ist es bewirkt, dass beim Verlassen der ersten Endlage nur wenige Umdrehungen der Kurbel benötigt werden, um einen großen Verschwenkweg des Radträgers 3 mit samt des Rades 4 zu bewirken.

Erfindungsgemäß erfolgt die Verstellung des Radträgers 3 mit samt des Rades 4 zwischen der ersten und der zweiten Endlage stufenweise. Dies bedeutet, dass insbesondere beim Verstellen aus der zweiten Endlage in Richtung der ersten Endlage der Radträger 3 mit samt des Rades 4 nicht nach einem bereits sehr kurzem Verschwenkweg vollständig freigegeben ist und der Radträger 3 mit samt des Rades 4 derart verschwenken kann, dass die Anhängerdeichsel auf den Erdboden herunterfallen kann. Nach Verlassen der Blockier-Lage in der zweiten Endlage ist durch die stufenweise Verstellung lediglich ein geringer Verstellweg bis zum Erreichen der nächsten Stufe freigegeben, sodass sowohl das ungewünschte Herunterfallen der Deichsel durch den freigegebenen Radträger 3 mit Rad 4 verhindert ist, als auch eine Verletzungsgefahr für eine sich in diesem Bereich befindliche Person weitestgehend vermieden, wenn nicht gar ausgeschlossen ist.

Wie aus den Figuren ersichtlich, kontaktiert der nach außen abragende Kragen 5 den ersten Endbereich 15 eines an einer Außenseite des Gehäuses 14 angeordneten Hebels 7. Beim Verstellen zwischen den Endlagen wird dieser Hebel 7 um eine Schwenkachse 8 verschwenkt. Die Schwenkachse 8 durchgreift dabei beidseitig mit ihren Enden die Längsseitenwände des Gehäuses 14. Dabei kontaktiert der zweite Endbereich des Hebels 7 einen Sperrkörper 9 an einer ersten Kontaktfläche 10. Der Sperrkörper 9 wird mittels des Hebels 7 in einer etwa zum Erdboden parallelen Richtung verstellt beziehungsweise verschoben. Dabei weist der Sperrkörper 9 einen zweiten Kontaktbereich 11 auf, der in einer Sperrlage zwischen an einem um eine Schwenkachse 19 verschwenkbaren Stellkörper 12 ausgebildeten Vorsprüngen angeordnet ist. Der Stellkörper 12 ist dabei fest mit dem Radträger 3 verbunden. Der Hebel 7, der Sperrkörper 9 und der Stellkörper 12 sind dabei außenseitig an einer Längsseitenwand des Gehäuses 14 angeordnet, welches am freien, unteren Ende des inneren Rohres 2 angeordnet ist. Der Endbereich 15 des Hebels 7 kontaktiert den Kragen 5 des äußeren Rohres 1 und wird bei der Verstellung des inneren Rohres 2 gegenüber dem äußeren Rohr 1 vom Kragen 5 mit Druck beaufschlagt, sodass der Hebel 7 um die Schwenkachse 8 des Hebels 7 verschwenkt.

Ferner weist das Gehäuse 14 ein Langloch 17 auf, welches von innerhalb des Gehäuses 14 angeordneten Führungsmitteln, im Ausführungsbeispiel von Führungsbolzen 18, nach außen durchgriffen ist. Dabei ist der Sperrkörper 9 gegen die Kraft einer Feder 16, wie insbesondere aus Figur 5 ersichtlich, in der ersten Endlage vorgespannt gehalten. Anstelle von Führungsbolzen 18 können auch Führungsstifte als Führungsmittel vorgesehen sein.

Die Vorsprünge 13 weisen eine spitze, zahnartige Form auf. Dabei ist jeweils zwischen zwei aufeinanderfolgenden Vorsprüngen ein Bereich ausgebildet, der den zweiten Kontaktbereich 11 beziehungsweise eine am zweiten Kontaktbereich 11 ausgebildete Kontur umgreifen oder aufnehmen und in dieser Lage den Stellkörper 12 sperren. Dabei bildet jeder zwischen zwei aufeinanderfolgenden Spitzen oder Zähnen ausgebildete Bereich jeweils eine Stufe bei der Verstellung des Radträgers 3 mit samt des Rades 4 zwischen den Endlagen.

Bei einer derartigen erfindungsgemäßen Stützeinrichtung ist ein Verbleiben in der jeweiligen Position in den Stufen sowohl bei einem freihängenden als auch bei einem aufstehenden Rad 4 jederzeit ermöglicht. Dies bedeutet, dass auch bei einem versehentlichen Betätigen der Kurbel in der zweiten Endlage nach Verlassen der zweiten Endlage der Radträger 3 mit samt des Rades 4 nicht frei verschwenken kann und die Anhängerdeichsel auf den Erdboden fallen kann. Nach Verlassen der zweiten Endlage erfolgt eine freie Bewegung des Radträgers 3 mit samt des Rades 4 lediglich bis zum Erreichen der nächsten, zwischen zwei Vorsprüngen 13 gebildeten Stufe. Dies bedeutet, dass die Anhängerdeichsel nach Verlassen der zweiten Endlage lediglich um wenige Zentimeter, das heisst bis zum Erreichen der darauffolgenden Stufe, in Richtung des Erdbodens fallen kann.

Hierdurch ist eine Verletzungsgefahr von sich in der Nähe befindlichen Personen weitestgehend ausgeschlossen.

Bei der erfindungsgemäßen Stützeinrichtung erfolgt die Verstellung des Radträgers 3 mit samt des Rades 4 auf an sich bekannter Art und Weise durch Betätigen einer Kurbel, welche das innere Rohr 1 aus dem äußeren Rohr 2 in Richtung des Erdbodens verstellt. Während des Herausfahrens des inneren Rohres 2 aus dem äußeren Rohr 1 heraus wird der erste Endbereich 15 des Hebels 7 freigegeben, sodass der durch die Kraft einer Feder 16 vorgespannte Sperrkörper 9 in etwa paralleler Richtung zum Erdboden verschoben wird. Die Verschiebung ist dabei jeweils nur soweit möglich, wie der zweite Endbereich des Hebels 7 den Sperrkörper 9 freigibt.

Somit ist insbesondere beim Verstellen von der zweiten Endlage in Richtung der ersten Endlage ein ungewünschtes Hochschwenken des Radträgers 3 mit samt des Rades 4 nach Freigabe einer Blockier-Position in der zweiten Endlage sicher verhindert.

Je nach gewünschter Ausführungsform der Erfindung können Hebel 7, Sperrkörper 9 und Stellkörper 12 an nur einer Längsseitenwand des Gehäuses 14 angeordnet sein. In einem bevorzugten Ausführungsbeispiel können an beiden Längsseitenwänden des Gehäuses 14 jeweils ein Hebel 7, ein Sperrkörper 9 und an beiden Laschen des Radträgers 3 ein Stellkörper 12 befestigt sein. Bei dieser beidseitig angeordneten Ausführungsform ist eine besonders hohe Aufnahme von Kräften bei gleichzeitig besonders hoher Lebensdauer ermöglicht.

Die Erfindung ist nicht auf das Ausführungsbeispiel beschränkt, sondern im Rahmen der Offenbarung vielfach variabel.

Alle neuen in der Beschreibung und/oder Zeichnung offenbarten Einzel- und Kombinationsmerkmale werden als erfindungswesentlich angesehen.

### Bezugszeichenliste:

- 1: äußeres Rohr
- 2: inneres Rohr
- 3: Radträger
- 4: Rad
- 5: Kragen (an 1)
- 6: Kontur (an 3)
- 7: Hebel
- 8: Schwenkachse von 7
- 9: Sperrkörper
- 10: erste Kontaktfläche an 9
- 11: zweiter Kontaktbereich an 9
- 12: Stellkörper
- 13: Vorsprünge an 12
- 14: Gehäuse
- 15: erster Endbereich von 7
- 16: Feder
- 17: Langloch
- 18: Führungsbolzen
- 19: Schwenkachse von 12

## Patentansprüche

1. Stützeinrichtung zur Befestigung an einer Anhängerdeichsel, zumindest umfassend ein äußeres Rohr (1) und ein in dem äußeren Rohr (1) angeordnetes und mittels einer Kurbel teleskopartig verstellbares, inneres Rohr (2), an dem das erste Ende eines Radträgers (3) angelenkt ist, wobei am zweiten Ende des Radträgers (3) ein Stützrad (4) angeordnet ist und der Radträger (3) mitsamt des Stützrads (4) in einer ersten Endlage, in der das innere Rohr (2) nahezu vollständig innerhalb des äußeren Rohres (1) angeordnet ist und das Stützrad (4) hochgeschwenkt und dem äußeren Rohr (1) angenähert ist in eine zweite Endlage, in der das innere Rohr (2) teilweise aus dem äußeren Rohr (1) in Richtung des Erdbodens herausragt und das Stützrad (4) in eine von dem äußeren Rohr (1) beabstandete und dem Erdboden zugewandte Lage verschwenkt ist, wobei an dem der Kurbel entgegengesetzten Ende des äußeren Rohres (1) ein nach außen abragender Kragen (5) angeordnet ist, entlang dessen eine am ersten Ende des Radträgers (3) angeordnete Kontur (6) beim Verstellen zwischen den Endlagen verläuft und die Verschwenkung bewirkt, **dadurch gekennzeichnet, dass** die Verstellung des Radträgers (3) mitsamt des Rads (4) zwischen der ersten und der zweiten Endlage stufenweise erfolgt.

2. Stützeinrichtung nach Anspruch 1, **dadurch gekennzeichnet, dass** am freien Ende des inneren Rohres (2) ein kastenartiges Gehäuse (14) angeordnet ist, wobei der nach außen abragende Kragen (5) den ersten Endbereich (15) eines Hebels (7) kontaktiert und diesen Hebel (7) beim Verstellen zwischen den Endlagen um eine Schwenkachse (8) verschwenkt, wobei der zweite Endbereich des Hebels (7) einen Sperrkörper (9) an einer ersten Kontaktfläche (10) kontaktiert und den Sperrkörper (9) in einer etwa zum Erdboden parallelen Richtung verstellt, wobei der Sperrkörper (9) einen zweiten Kontaktbereich (11) aufweist, der in einer Sperrlage zwischen an einem um eine Schwenkachse (19) verschwenkbaren Stellkörper (12) ausgebildeten Vorsprüngen (13) angeordnet ist, wobei der Stellköper (12) fest mit dem Radträger (3) verbunden ist, wobei der Hebel (7), die Schwenkachse (8) des Hebels (7), der Sperrkörper (9) und der Stellkörper (12) an einer senkrecht zum Erdboden verlaufenden Außenseite des kastenartigen Gehäuses (14) angeordnet sind, wobei der erste Endbereich (15) des Hebels (7) die am inneren Rohr (2) befestigte Oberseite des Gehäuses (14) überragt und dort den Kragen (5) des äußeren Rohres (1) kontaktiert.

3. Stützeinrichtung nach Anspruch 2, **dadurch gekennzeichnet, dass** außenseitig an jeder senkrechten Längsseitenwand des Gehäuses (14) je ein Hebel (7), ein Sperrkörper (9) und ein Stellkörper (12) angeordnet ist, wobei die Hebel (7) durch eine Schwenkachse (8) und die Stellkörper (12) durch eine jeweils das Gehäuse (14) durchgreifende Schwenkachse (19) verbunden sind.

4. Stützeinrichtung nach Anspruch 2 oder 3, **dadurch gekennzeichnet, dass** das Gehäuse (14) ein Langloch (17) aufweist, welches von am Gehäuses (14) angeordneten oder das Gehäuse (14) durchgreifenden Führungsmitteln durchgriffen und geführt ist, an deren freien Enden der Sperrkörper (9) befestigt ist, wobei der Sperrkörper (9) gegen die Kraft einer Feder (16) vorgespannt gehalten ist.

5. Stützeinrichtung nach Anspruch 4, **dadurch gekennzeichnet, dass** die Feder (16)aus einer Zugfeder oder einer Druckfeder gebildet ist, die innerhalb des Gehäuses (14) angeordnet ist, wobei der Sperrkörper (9) in der ersten Endlage durch die Kraft der Feder (16) maximal vorgespannt ist.

6. Stützeinrichtung nach Anspruch 4 oder 5, **dadurch gekennzeichnet, dass** die Führungsmittel durch Führungsbolzen (18) oder Führungsstifte gebildet sind.

7. Stützeinrichtung nach einem der Ansprüche 2 bis 6, **dadurch gekennzeichnet, dass** die Vorsprünge (13) eine spitze oder zahnartige Form aufweisen, wobei jeweils zwischen zwei aufeinanderfolgenden Spitzen oder Zähnen ein Bereich ausgebildet ist, der den zweiten Kontaktbereich (11) oder eine am zweiten Kontaktbereich (11) ausgebildete Kontur umgreift oder aufnimmt und in dieser Lage den Stellkörper (12) sperrt, wobei jeder zwischen zwei aufeinanderfolgenden Spitzen oder Zähnen ausgebildete Bereich eine Stufe bei der Verstellung des Radträgers (3) mitsamt des Stützrads (4) zwischen den Endlagen bildet.
